Europäisches Patentamt

European Patent Office

Office européen des brevets

(11) Publication number: **0 336 636**
**A2**

## EUROPEAN PATENT APPLICATION

(21) Application number: 89303105.4

(22) Date of filing: 29.03.89

(51) Int. Cl.4: **B60J 5/04**

(30) Priority: 05.04.88 US 177765

(43) Date of publication of application:
11.10.89 Bulletin 89/41

(84) Designated Contracting States:
AT BE CH DE ES FR GB GR IT LI LU NL SE

(71) Applicant: HOOVER UNIVERSAL INC
825, Victors Way
Ann Arbor Michigan 48104(US)

(72) Inventor: Lomasney, David James
421 Avalon Beach
Marine City Michigan 48039-48013(US)
Inventor: Dietze, Robert Hans
4154 Meadowlane Drive
Bloomfield Hills, Michigan(US)
Inventor: Rohrback, Jeffrey Dean
7408 Holloway Road
Britton Michigan 49229(US)

(74) Representative: Williams, Trevor John et al
J.A. KEMP & CO. 14 South Square Gray's Inn
London WC1R 5EU(GB)

(54) Functional door cartridge and method of manufacturing thereof.

(57) A functional door cartridge for use in a motor vehicle door assembly is disclosed. The cartridge consists of a skeleton frame forming the general outline of a door. A portion of the frame, also serves as glass guides for the window glass. Another portion of the frame serves as a guide for the window regulator lift plate. All moving components of the door assembly such as the window, door latch, window regulator, interior and exterior door handles and latch rods are mounted to the functional door cartridge which is assembled in a horizontal position rather than typical upright position used to assemble doors. After assembly, all functions of the door are fully tested before the door cartridge is inserted into an exterior door panel to complete the door assembly.

FIG. 1

EP 0 336 636 A2

## FUNCTIONAL DOOR CARTRIDGE AND METHOD OF MANUFACTURING THEREOF

### BACKGROUND OF THE INVENTION

This invention relates to door assemblies for use in motor vehicles and more particularly to a functional door cartridge consisting of a structural frame and functional door components which form part of the frame. The cartridge frame supports the movable door components so that the cartridge can be pre-assembled and tested and mounted in place on the finished vehicle in mated relation with the usual outer door panel.

Conventional vehicle doors are made by stamping from sheet steel an inner panel and an outer panel. Each of these panels has multiple openings formed in it, and each opening represents a significant volume of scrap steel. The largest opening is for the window. The other openings, particularly in the inner panel, are required in order to enable the assembly of various components in the door in the space between the two panels. These components include the latch mechanism, interior and exterior door handles with control rods to connect the handles to the latch mechanism, window glass, window regulator and window glass guides. Other accessories can be added such as power door locks, etc. Additionally, the assembly operations are performed while the door is in an upright position. The assemblers must work against the force of gravity while installing these components.

A completed door assembly may have as many as one hundred separate parts, supplied by several different suppliers, each of which must be tracked by the vehicle manufacturer. The number of components installed in a door assembly is rapidly making the door assembly one of the most complex components of a motor vehicle.

With only a limited amount of space between the two door panels it is becoming more difficult to install the components into the door as well as to service these components later. A door assembly which produces less scrap in production, is easier to assemble and service and reduces the total number of parts to be tracked by the vehicle assembler, while at the same time maintaining the same functions and features of current doors is needed.

Accordingly, it is an object of this invention to provide a vehicle door assembly, the manufacture of which reduces the amount of steel scrap.

It is a further object of this invention to reduce the total number of components in a door assembly and also to reduce the number of components tracked by the vehicle assembler at the assembly plant.

It is yet another object of this invention to provide a door assembly which can be assembled in a horizontal position such that the assembler does not work against the force of gravity.

It is a feature of this invention to provide a skeleton door frame structure which has all of the moving door components mounted thereto.

It is a further feature of this invention to provide a skeleton door frame in which the frame itself serves as a regulator and guide for the window glass.

It is an advantage of this invention that all moving components of the vehicle door assembly can be fully function tested after assembly of the door cartridge prior to final assembly of the door.

### SUMMARY OF THE INVENTION

The present invention consists of a functional door cartridge which includes all the moving components of the door assembly. After assembly of the door cartridge, all moving components can be fully function tested. After completion, the door cartridge is then shipped to the vehicle assembler who then completes the door assembly by installing the functional door cartridge into an outer door panel and installing the final trim.

The functional door cartridge comprises a number of skeletal frame members interconnected so as to define the outline of a door. The frame includes forward and rearward and intermediate vertical members, a lower cross member, a belt line cross member and an intermediate cross member, all of which are interconnected. An upper door frame which forms the outline of the window section of the door is installed at the top of the belt line cross member. The upper door frame can be omitted for door assemblies used in convertible vehicles. In other embodiments, the upper door frame can be included as an outer portion of the outer door panel as opposed to the functional door cartridge.

In addition to serving as structural members, the forward and rearward vertical frame members also serve as channel guides for the window glass. The intermediate vertical frame member also serves as a channel guide for the window glass attaching bracket and lift plate portion of the window regulator. By combining the glass guide and regulator functions into the structural members, the total number of components in the door assembly is reduced.

The functional door cartridge is "designed for assembly" meaning that ease in assembly is a primary design consideration. The door cartridge can be assembled using fixtures on a horizontal work station. This eliminates the need for working against gravity while installing the components into the functional door cartridge. This results in increased ease in assembling the door cartridge which also improves the reliability of the cartridge assembly. Once assembled, all of the moving components of the door assembly can be fully function tested prior to shipment of the door cartridge to the vehicle assembler. Once shipped to the assembly plant, the door cartridges are mated with the outer door panel and final trim is added. The door assembly is then mounted to the vehicle as the vehicle leaves the assembly line. The functional door cartridge includes an electrical wire harness which can be plugged into the vehicle wiring harness as the door assembly is mounted to the vehicle.

BRIEF DESCRIPTION OF THE DRAWINGS .

Various advantages of the present invention will become apparent to one skilled in the art upon reading the following specification and the references to the following drawings in which:

Figure 1 is a perspective view of the functional door cartridge;

Figure 1a is a cross section of the rearward vertical frame member as seen from substantially the line 1a-1a in Figure 1.

Figure 2 is a perspective view of a portion of the door cartridge in the direction of arrow 2 of Figure 1, showing the construction of the joints between the vertical and horizontal cross members;

Figure 3 is a perspective view of the door cartridge in the direction of arrow 3 of Figure 1, showing the window regulator;

Figure 4 is a perspective view of the door cartridge in the direction of arrow 4 in Figure 1 showing the door latch mechanism assembly;

Figure 5 is a perspective view of a functional door cartridge showing the exterior door handle;

Figure 6 is a perspective view of the door panel which mates with the door cartridge, showing the interior side of the door panel;

Figure 7 is a perspective view of the functional door cartridge showing the mating of the door cartridge with the door panel.

Figure 8 is a perspective view of the door cartridge as installed in the door panel;

Figure 9 is a perspective view of the completed door assembly showing the exterior door handle and lock;

Figure 10 is a cross section of the door handle as seen from substantially the line 10-10 in Figure 9;

Figure 11 is a perspective view of the door cartridge installed in a door panel for use in a convertible vehicle;

Figure 12 is a perspective view of the exterior of a door assembly showing an optional plastic finish panel for the upper door frame.

DETAILED DESCRIPTION OF THE INVENTION

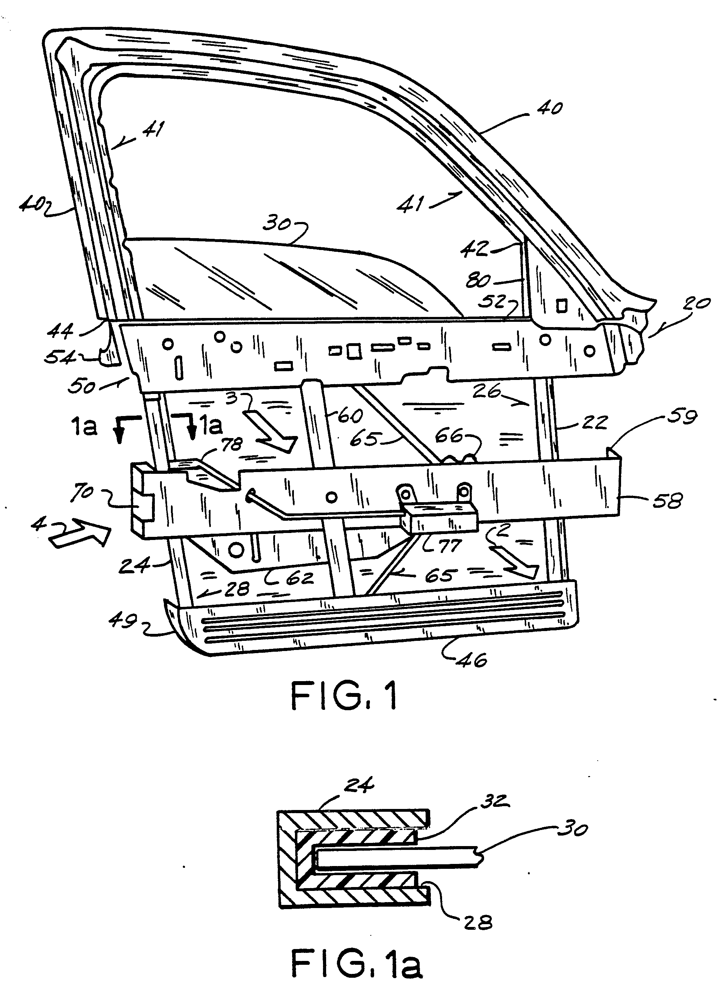

One embodiment of the functional door cartridge of this invention is shown in Figure 1 and indicated generally at 20. This figure shows the interior side of a functional door cartridge for use in a driver's side front door of a motor vehicle. The terms interior, exterior, rearward and forward as used in this description are related to the door cartridge as installed in a vehicle.

The functional door cartridge includes a forward vertical or upright frame member 22 and a rearward vertical frame member 24. Frame members 22 and 24 are roll formed or stamped as are all other structure members used in the functional door cartridge. Frame members 22 and 24 are of a "C" channel construction, having channels 26 and 28 respectively. The channel section 26 of forward vertical frame member 22 is directed rearward while the channel section 28 of the rearward vertical frame member 24 is directed forward. Channel sections 26 and 28 serve as guides for the window glass 30, window glass 30 being movable up and down in these channels.

Window seals 32 are included in channels 26 and 28. Figure 1a is a cross section of vertical frame member 24 showing the glass 30 mounted in the seal 32 in channel 28. Integration of the window guide into the door frame structure eliminates the need for separate window guides mounted to the inner door panel as used in current door construction. This results in a reduction of the number of separate components in the door assembly and reduces the weight of the door assembly.

An upper door frame 40 is connected to the upper end of forward vertical frame member 22 generally at 42 and to the upper end of rearward vertical frame member 24 at 42. In alternative designs as discussed below, the upper door frame may be a part of the outer door panel or may be deleted altogether for convertible vehicle doors. Upper door frame 40 includes a channel 41 for guiding and retaining the window glass 30. Channel 41, like channels 26 and 28, includes a window seal.

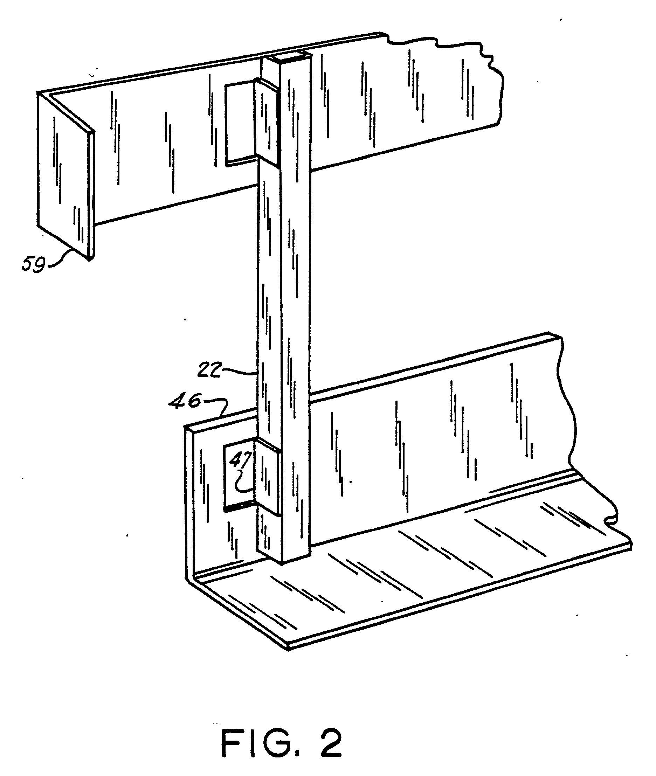

A lower cross member 46 defines the bottom of the functional door frame and is mounted to the lower end of the vertical frame members. Figure 2 is a view in the direction of arrow 2 which shows in detail the manner in which lower cross member 46 is joined to the vertical wheel frame members. A tab 47 is struck out of lower cross member 46 and bent out at approximately a right angle and is welded to vertical support member 22. Any secure attachment method which can withstand the vehicle environment may be used.

Referring to Figure 1, a belt line cross member is shown generally at 50 and defines the lower edge of the window opening. The cross member 50 includes two members, an interior member 52 mounted to the inside of the vertical frame members and an exterior member 54 mounted to the outer side of the vertical frame members. The window glass 30 passes between members 52 and 54.

An intermediate cross member 58 is located generally midway between the lower cross member 46 and the belt line cross member 50. The exact location will vary depending on the desired location of various functional components mounted to the intermediate cross member 58. All connections of the cross members to the vertical members are formed to the manner shown in Figure 2.

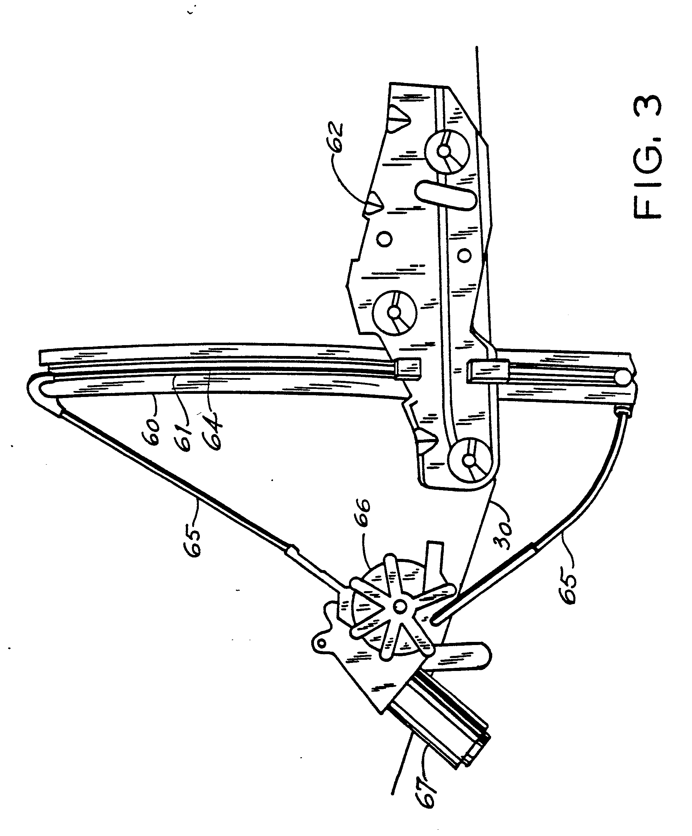

An intermediate vertical frame member 60 is located between the forward and rearward vertical frame members 22 and 24 and attached to the three cross members 46, 50 and 58 in the manner previously described. Vertical member 60 is a "C" channel structural member with the channel 61 facing the exterior. In addition to being a structural member, member 60 serves as a portion of the window regulator, further reducing the total number of components. The window regulator is shown in Figure 3 which is a view in the direction of arrow 3.

Figure 3 shows the window regulator used to raise and lower the window glass 30. Channel 61 guides the motion of glass attaching bracket and lift plate 62. Plate 62 is raised and lowered by cable 64 which passes through channel 61. Cable 64 travels through cable shields 65 attached to each end of channel 61 and is wound around the drum of drum assembly 66. Drum assembly 66 is mounted to the exterior side of intermediate cross member 58 not shown in Figure 3. Drum assembly 66 can be equipped with an optional motor 67 for power window operation. For manual operation, drum assembly 66 is adapted for the attachment of a window crank.

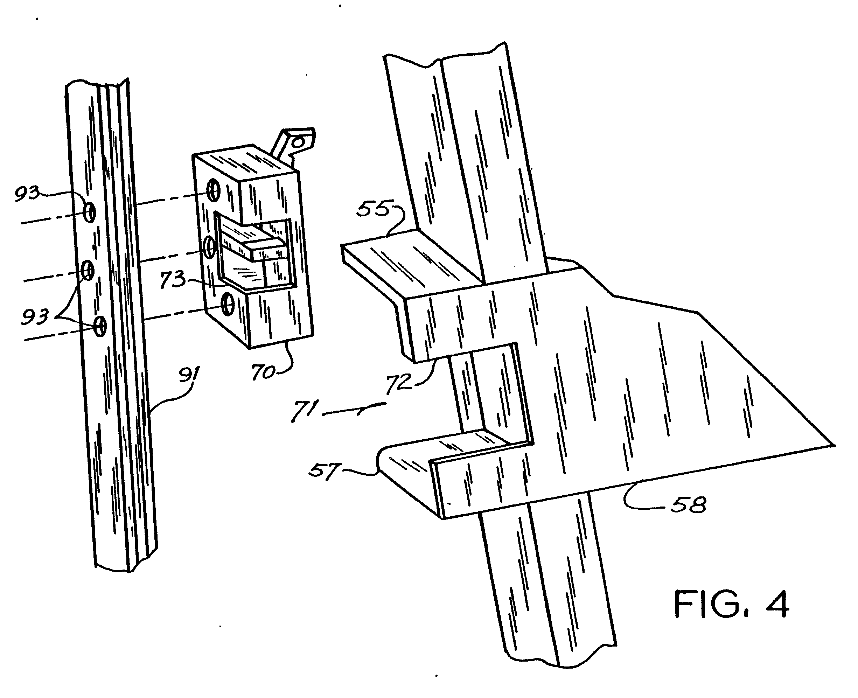

A self adjusting latch assembly 70 is mounted to the rearward end of intermediate cross member 58 for latching the door assembly in a closed position. Figure 4 is a view in the direction of arrow 4, in Figure 1, showing an enlarged view of the latch mounting. The end of cross member 58 includes a latch mounting pocket 71. Latch 70 is held into pocket 71 by friction fit between·upper rail 55 and lower rail 57 of the cross member 58. When the functional door cartridge is mounted in the outer door panel, the horse collar 91 of the door panel is bolted to the latch assembly through holes 93. The friction fit into pocket 71 allows for adjustment of the latch for proper alignment with horse collar 91. Opening 73 of latch 70 is aligned with opening 72 in cross member 58 to provide clearance for the latch post to enter the latch.

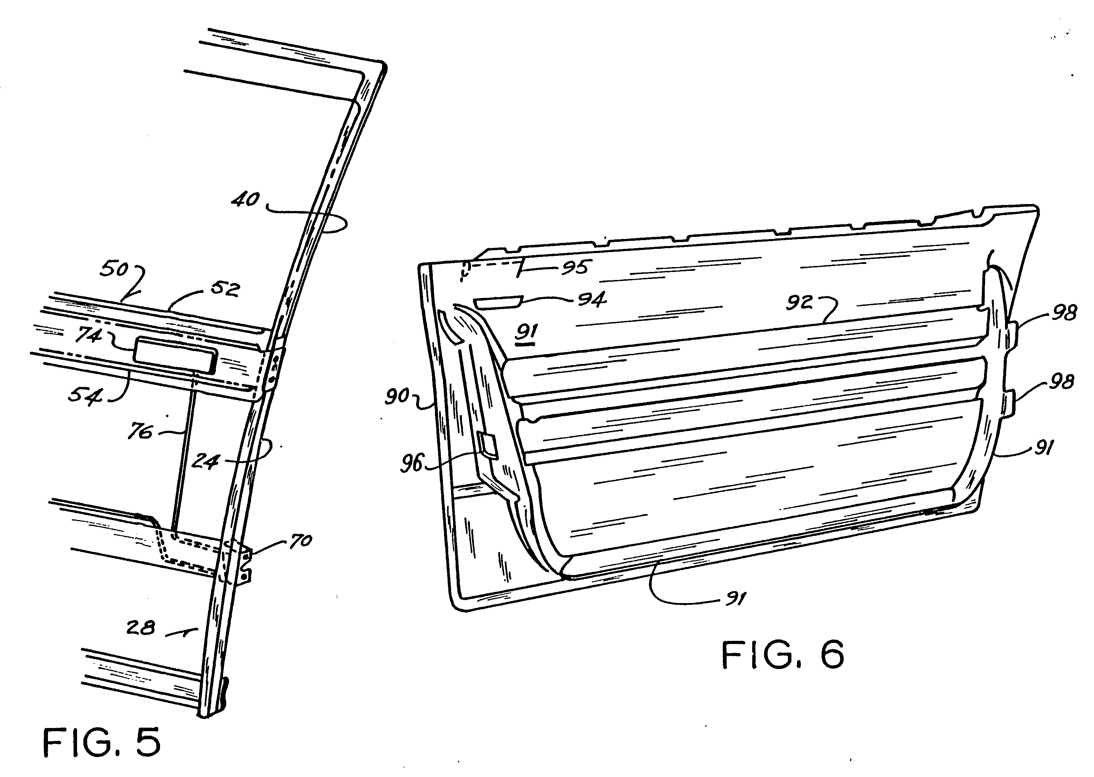

Figure 5 shows the exterior door handle assembly 74 mounted to the exterior of belt line cross member 50. The handle will extend through an opening in the door panel when assembled. Rod 76 interconnects the handle 74 to latch 70 to allow remote operation of the latch from the door exterior to open the door.

Referring to Figure 1, an interior door handle 77 is mounted to intermediate cross member 58. A rod 78 interconnects the interior handle with latch 70 for remote operation of the latch from inside the vehicle.

A mirror assembly 80 is mounted in the generally triangular opening between the upper door frame 40, belt line cross member 50 and vertical member 22. Mirror assembly 80 includes an adjustable rear view mirror on the exterior of the door assembly.

Once the functional door cartridge has been assembled, all door operations can be fully function tested to ensure proper operation. This includes the latch, handles, and window regulator. Proper glass alignment can also be checked.

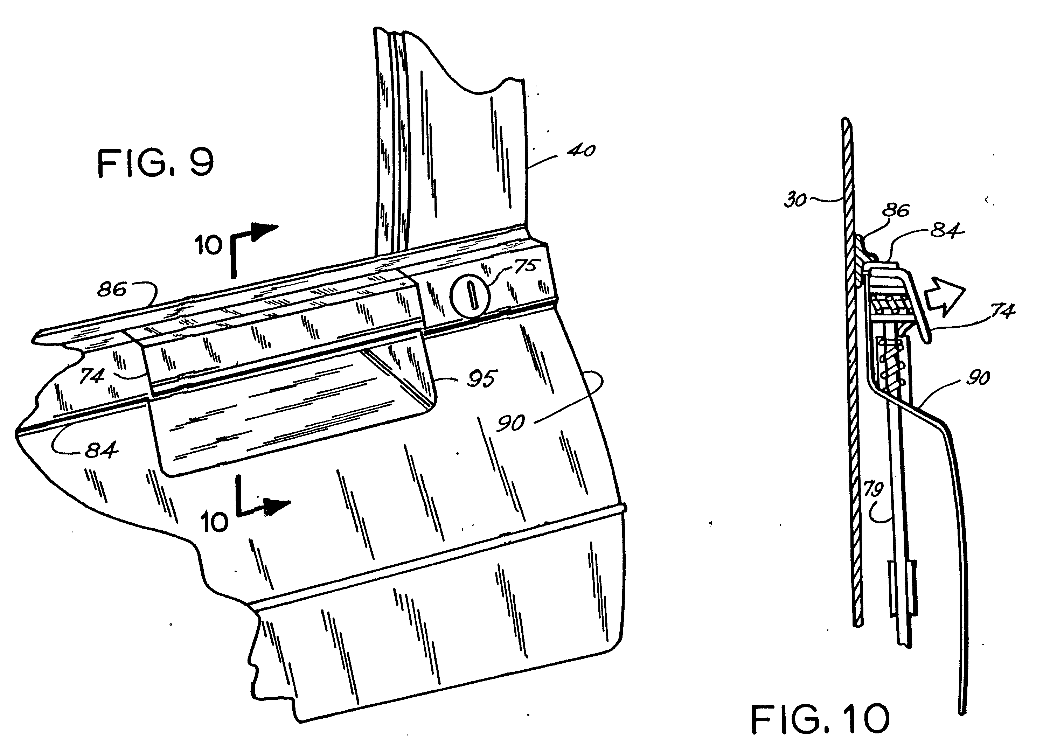

Figure 6 shows an inner side of door panel 90 into which the functional door cartridge is mounted. Intrusion beam 92 is attached to the door panel to provide required occupant protection in the event of a side impact collision. The door panel also includes generally U-shaped horse collar 91. Collar 91 is made of sheet steel and extends inwardly from the door panel. Door hinges 98 are attached to the forward side of horse collar 91 for mounting of the door assembly to the vehicle. The rearward edge of the horse collar has an opening 96 for reception of the door latch post into the door latch 70. Opening 94 is for the exterior door handle 74, as shown in Figure 5, to extend through. The phantom lines at 95 show an alternative design where the exterior door handle is at the top edge of the door panel and at the top of the belt line cross member as will be discussed below in conjunction with Figure 9.

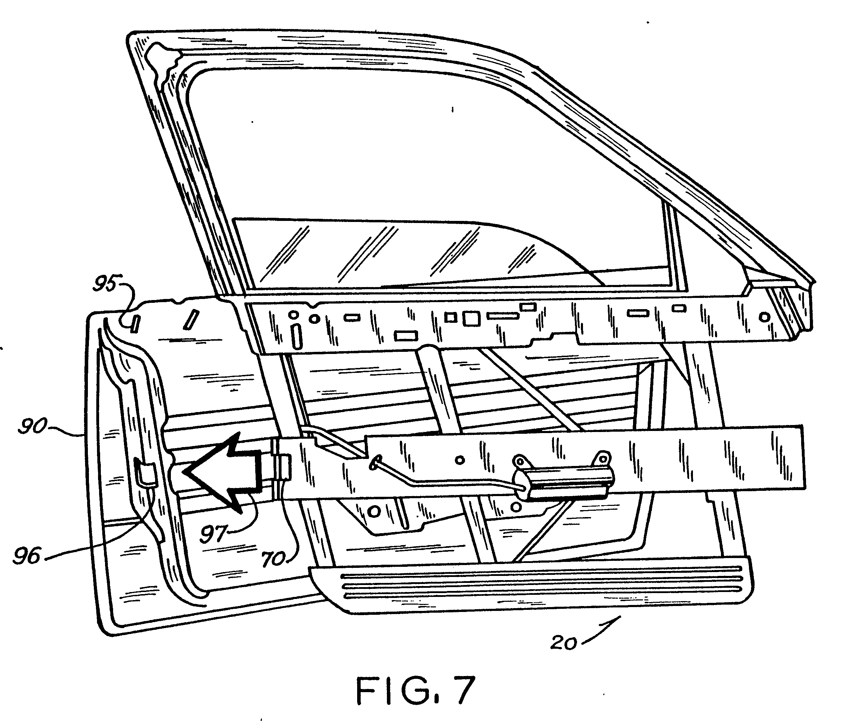

The completed functional door cartridge is shipped to the automotive assembly plant where it is mated in a painted door panel 90 provided by the automobile manufacturer. Referring to Figure 7, the cartridge is mounted into the door panel by inserting the rearward edge of the cartridge into the rear section of the horse collar as shown by arrow 97. The door latch 70 is aligned with opening 96 in the horse collar while the exterior door handle and the door handle opening in the door panel are aligned. The forward end of the door cartridge is then pushed into place. The functional door cartridge is supported in and bolted to the horse collar. The cross member ends include mounting flanges, such as flange 49 on the rearward end of cross member 46 and flange 59 on the forward edge of cross member 58 as shown in Figure 1, for bolting the functional door cartridge to the horse collar. Design considerations may prevent bolting each cross member end to the horse collar such as the door latch installed in the end of cross member 58. It is preferred to attach as many cross member ends as is possible to the horse collar.

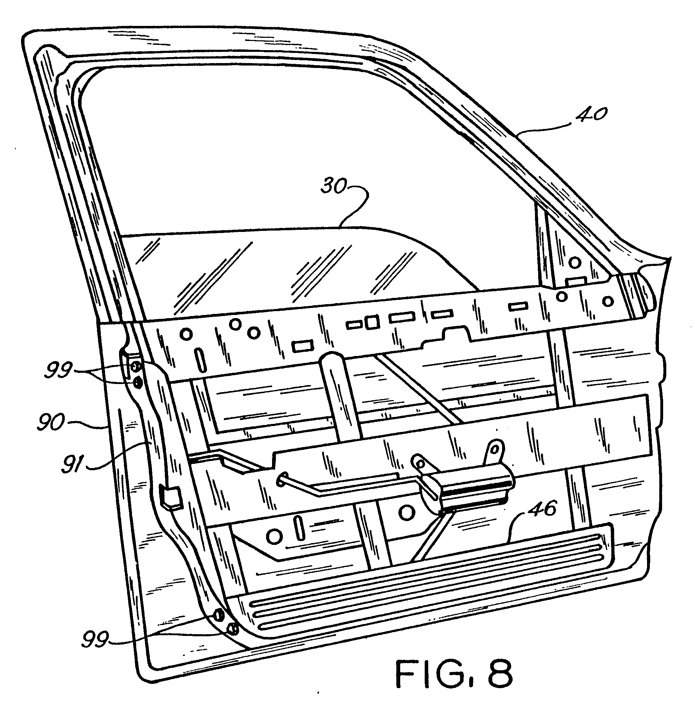

Figure 8 shows a functional door cartridge as installed in a door panel including a portion of the bolts 99 used to bolt the cross members to the door panel horse collar.

Figure 9 shows the exterior handle of the completed door assembly. This embodiment shows the door handle 74 mounted at the top of door panel 90. A belt line trim strip 84 is attached to the upper edge of the belt line cross member 50 to provide a finished appearance at the bottom of the window. Trim strip 84 includes a window seal 86.

Figure 10 shows a cross section of the handle mechanism 74 including the trim strip 84 and window seal 86. Also shown is the door handle lock rod 79 which connects the doorlock 75 to the latch mechanism 70 to prevent opening of the door from the exterior when locked.

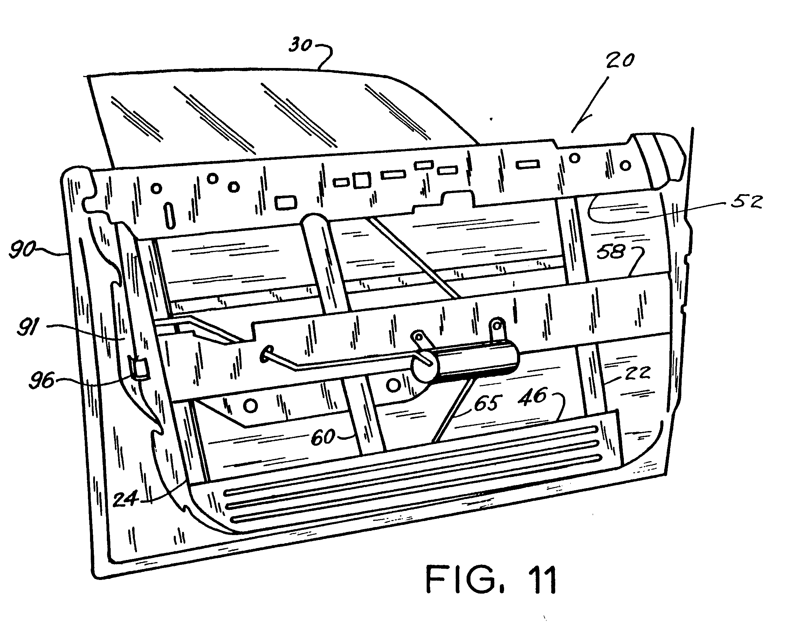

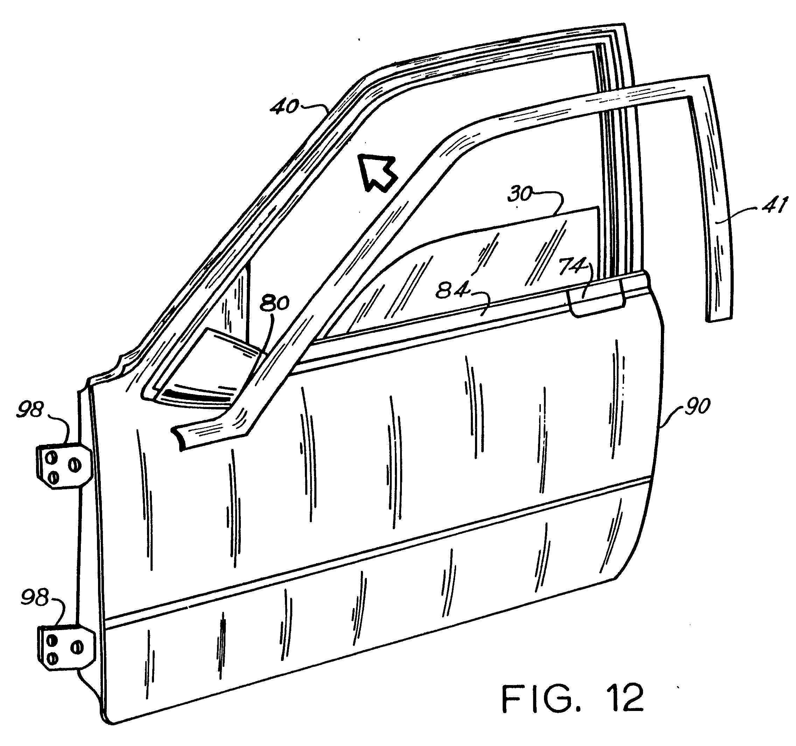

Figure 11 illustrates a completed door assembly for use with a convertible vehicle. The door cartridge 20 is identical to the cartridge used for non-convertible vehicles except the upper door frame is omitted. There are several options regarding the construction of the upper door frame. If desired, it can be included as a portion of the door panel 90 instead of being a part of the functional door cartridge 20 as shown in Figure 1. In this case, the door cartridge would be the same as the cartridge used with convertible vehicles as shown in Figure 11. With the design shown in Figure 1, the exterior of the upper door frame 40 can be styled and finished to match the vehicle exterior or an outer plastic finish panel 41 can be installed over the upper door frame as shown in Figure 12.

It should be understood that the present invention was described in connection with one specific embodiment. Other modifications will become apparent to one skilled in the art upon studying the specification, drawings, and the claims.

## Claims

1. A functional cartridge for attachment to a motor vehicle door assembly, said door assembly being hingedly connectable to said motor vehicle, said cartridge comprising:

   a. a skeleton frame comprising a plurality of frame members interconnected so as to define the outline of a door and having a plurality of vertically spaced cross frame members and a plurality of horizontally spaced upright frame members, at least one of said upright frame members defining a guide channel;

   b. a glass panel mounted within said channel of said upright frame member for guided up and down movement;

   c. a window regulator mounted to said skeleton frame for moving said glass panel up and down; and

   d. a latch mechanism mounted to said skeleton frame for latching said door assembly in a closed position.

2. The cartridge of claim 1 wherein said regulator includes an electric motor.

3. The cartridge of claim 1, further comprising: a first handle mounted to one of said cross members and interconnected with said latch mechanism for operation of the latch mechanism from the exterior side of said door assembly.

4. The cartridge of claim 1 further comprising: a second handle mounted to one of said cross members and interconnected with said latch mechanism for operation of the latch mechanism from the interior side of said door assembly.

5. A cartridge for attachment to a motor vehicle door assembly, said door assembly being hingedly connectable to said motor vehicle, said cartridge comprising:

   a. a frame having forward, intermediate and rearward vertical members interconnected with lower, intermediate and belt line cross members, and an upper door frame above said belt line cross member, at least one of said forward and rearward vertical members defining a guide channel;

   b. a glass panel mounted within said guide channel of said at least one of said forward and rearward vertical members for up and down movement, said panel in contact with said upper door frame when in the upper most position;

   c. a window regulator mounted to said intermediate cross member for moving said glass panel up and down; and

   d. a latch mechanism mounted to said intermediate cross member for latching said door assembly in a closed position.

6. The cartridge of claim 5 wherein said regulator includes an electric motor.

7. The cartridge of claim 5 further comprising:
a first handle mounted to one of said cross members and interconnected with said latch mechanism for operation of the latch mechanism from the exterior side of said door assembly.

8. The cartridge of claim 5 further comprising:
a second handle mounted to one of said cross members and interconnected with said latch mechanism for operation of the latch mechanism from the interior side of said door assembly.

9. In a door assembly hingedly connectable to a motor vehicle, a functional door cartridge attachable to said door assembly comprising:

a. a skeleton frame comprising a plurality of frame members interconnected so as to define the general outline of a door and having a plurality of vertically spaced frame members and a plurality of horizontally spaced upright frame members, at least one of said upright frame members defining a guide channel;

b. a glass panel mounted within said guide channel of said upright frame member for guided up and down movement;

c. a window regulator mounted to said skeleton frame for moving said glass panel up and down;

d. a latch mechanism mounted to said skeleton frame for latching said door assembly in a closed position;

e. a first handle mounted to one of said cross members and interconnected with said latch mechanism for operation of the latch mechanism from the exterior side of said door assembly;

f. a second handle mounted to one of said cross members and interconnected with said latch mechanism for operation of the latch mechanism from the interior side of said door assembly; and

g. means on at least some of said frame members for mating said cartridge with an exterior door panel and intrusion beam assembly to complete said door assembly.

10. In a motor vehicle door assembly hingedly connectable to a motor vehicle, a functional door cartridge attachable to said door assembly and having a movable window glass, comprising:
a skeleton frame made from a plurality of linearly extending frame members interconnected so as to define the general outline of a door having a plurality of vertically spaced frame members and a plurality of horizontally spaced upright frame members, a portion of said upright frame members defining channels for guiding up and down movement of said glass.

11. The functional door cartridge of claim 10, further comprising:
a window regulator for moving said glass up and down, said regulator having a lift plate attached to said glass, a cable for moving said lift plate up and down, a rotating drum for simultaneous winding and unwinding of said cable to move said lift plate, means for rotating said drum, said lift plate guided by a channel in a portion of said upright frame members, and said cable passing through said channel.

12. The door cartridge of claim 11, further comprising a door latch mounted to said skeleton frame.

13. The door cartridge of claim 12 further comprising an exterior door handle mounted to said skeleton frame and interconnected to said door latch for operation of said latch from the exterior of said door assembly.

14. The door cartridge of claim 12 further comprising an interior door handle mounted to said skeleton frame and interconnected to said door latch for operation of said latch from the interior of said door assembly.

15. A method of manufacturing a functional door cartridge for use in a motor vehicle door assembly comprising the steps of:
providing a plurality of frame members, a portion of which define channel sections, a glass panel, a window regulator, a door latch mechanism, an exterior handle, an interior door handle and rods to interconnect said handles with said latches;
positioning said frame members in an assembly fixture such that said frame member from a skeleton frame defining the general outline of a door in a generally horizonal plane;
fastening said frame members to one another;
mounting said glass panel in a portion of said channel sections for movement in said channel sections;
mounting said door latch mechanism to said skeleton frame;
mounting said interior and exterior handles to said skeleton frame; and
interconnecting said handles to said latch with said rods so that said window regulator, said latch and said handles can be function tested prior to assembly of said door cartridge in said door assembly.

16. The cartridge of claim 1 wherein two of said upright frame members define guide channels and wherein said glass panel is mounted within said two guide channels.

17. The cartridge of claim 5 wherein said forward and rearward vertical members each define a guide channel and wherein said glass panel is mounted within said guide channels.

18. The door assembly of cliam 9 wherein two of said upright frame members define guide channels and wherein said glass panel is mounted within said two guide channels.

19. A functional cartridge attachable to a motor vehicle door assembly hingedly connectable to a motor vehicle, said cartridge comprising:

a. a reticulated frame having a plurality of linearly extending frame members interconnected and sized to fit within the general outline of said door assembly and having a plurality of vertically spaced cross frame members and a plurality of horizontally spaced upright frame members, at least one of said upright frame members being a regulator support channel;

b. a glass panel mounted within said skeleton frame for up and down movement;

c. a window regulator mounted to said skeleton frame, having a lift plate mounted to said glass panel for moving said glass panel up and down, said regulator being guided during said up and down movement by said regulator support channel; and

d. a latch mechanism mounted to said skeleton frame for latching said door assembly in a closed position.

20. The cartridge of cliam 19 wherein there are three horizontally spaced upright frame members, one being said rectangular support channel and two others being window guide channels and wherein said glass panel has a front edge and a rear edge, said front and rear edges being mounted within said window guide channels.

FIG. 1

FIG. 1a

FIG. 2

FIG. 3

FIG. 4

FIG. 6

FIG. 5

FIG. 7

EP 0 336 636 A2

FIG. 8

FIG. 9

FIG. 10

FIG. 11

FIG. 12